# EUROPÄISCHE PATENTANMELDUNG

(11) **EP 3 579 149 A1**
(43) Veröffentlichungstag der Anmeldung: **11.12.2019**
(21) Anmeldenummer: 19174555.3
(22) Anmeldetag: 15.05.2019
(51) Int. Cl.: G06K 19/077, H04B 1/59

(54) **ELEKTRONISCHES KENNZEICHEN FÜR EINE METALLISCHE KOMPONENTE EINER ANLAGE**

(30) Priorität: 07.06.2018 DE 102018113612
(71) Anmelder: Gemü Gebr. Müller Apparatebau GmbH & Co. Kommanditgesellschaft, 74653 Ingelfingen (DE)
(72) Erfinder: Nadig, Sebastian, 74639 Zweifelingen (DE); Wagner, Jürgen, 74676 Niedernhall (DE)
(74) Vertreter: DREISS Patentanwälte PartG mbB

(57) **Zusammenfassung**

Es wird ein elektronisches Kennzeichen (2) für eine metallische Komponente einer Anlage bereitgestellt, wobei das elektronische Kennzeichen (2) umfasst: Einen metallischen Halterahmen (4), einen ersten Abschnitt (6), welcher innerhalb des metallischen Halterahmens (4) angeordnet und zu dem metallischen Halterahmen (4) festgelegt ist, einen passiven Transponder (8), und einen zweiten Abschnitt (10), wobei der zweite Abschnitt (10) den passiven Transponder (8) wenigstens zu dem ersten Abschnitt (6) festlegt.

## Beschreibung

Die Erfindung betrifft ein elektronisches Kennzeichen für eine metallische Komponente einer Anlage.

Die Probleme des Standes der Technik werden durch ein elektronisches Kennzeichen nach dem Anspruch 1 gelöst. Vorteilhafte Weiterbildungen finden sich in den Unteransprüchen sowie in der nachfolgenden Beschreibung von Ausführungsbeispielen.

Gemäß einem Aspekt dieser Beschreibung wird ein elektronisches Kennzeichen für eine metallische Komponente einer Anlage bereitgestellt, wobei das elektronische Kennzeichen umfasst: Einen metallischen Halterahmen, einen ersten Abschnitt, welcher innerhalb des metallischen Halterahmens angeordnet und zu dem metallischen Halterahmen festgelegt ist, einen passiven Transponder, und einen zweiten Abschnitt, wobei der zweite Abschnitt den passiven Transponder wenigstens zu dem ersten Abschnitt festlegt.

Vorteilhaft ermöglicht der metallische Halterahmen das Herstellen einer materialschlüssigen Verbindung mit der metallischen Komponente, wodurch eine verliersichere und beschädigungsresistente Anordnung des elektronischen Kennzeichens ermöglicht wird.

Darüber hinaus wird der Transponder durch den ersten Abschnitt von dem starren Metallrahmen dahingehend entkoppelt, dass Spannungen des Halterahmens nicht unmittelbar an den Transponder weitergegeben werden, was zu einer erhöhten Lebensdauer des Kennzeichens führt.

Der erste und der zweite Abschnitt beabstanden den passiven Transponder von Oberflächen des Kennzeichens. Das bedeutet, dass der erste und der zweite Abschnitt den Transponder einschließen und damit vor Beschädigungen schützen. Die von einem Lesegerät ausgehenden und durch den Transponder hindurchtretenden elektromagnetischen Wellen werden an der metallischen Komponente reflektiert. Die Reflexionswirkung der metallischen Komponente wird durch die Beabstandung des passiven Transponders durch wenigstens einen der beiden Abschnitte so weit reduziert, dass der Transponder mittels des Lesegeräts auslesbar ist.

Vorteilhaft ist der passive Transponder innerhalb des metallischen Halterahmens angeordnet. Dadurch baut das elektronische Kennzeichen sehr flach, lässt sich ohne Weiteres auslesen und bietet Freiheitsgrade bei der Anordnung, da bereits eine geringe Tiefe eines Sacklochs ausreicht, um das elektronische Kennzeichen in der metallischen Komponente anzuordnen.

Vorteilhaft ist der zweite Abschnitt wenigstens abschnittsweise innerhalb des metallischen Halterahmens angeordnet. Diese Anordnung des zweiten Abschnitts trägt zu der flachen Bauweise des elektronischen Kennzeichens bei.

Ein vorteilhaftes Beispiel zeichnet sich dadurch aus, dass der erste Abschnitt hin zu einer Anlageseite des elektronischen Kennzeichens angeordnet ist, und dass der zweite Abschnitt das elektronische Kennzeichen mit einer Auslesefläche abschließt.

Ein vorteilhaftes Beispiel zeichnet sich dadurch aus, dass der zweite Abschnitt hin zu einer Anlageseite des elektronischen Kennzeichens angeordnet ist, und wobei der erste Abschnitt das elektronische Kennzeichen mit einer Auslesefläche abschließt.

Ein vorteilhaftes Beispiel zeichnet sich dadurch aus, dass eine Antennenfläche des passiven Transponders mindestens 1/5 einer maximalen Dicke des elektronischen Kennzeichens, insbesondere mindestens die Hälfte der maximalen Dicke des elektronischen Kennzeichens, von einer Anlagefläche des elektronischen Kennzeichens beabstandet ist. Vorteilhaft garantiert diese Beabstandung der Antennenfläche von der Anlagefläche, dass der Transponder mithilfe eines Lesegeräts auslesbar bleibt. Auf der anderen Seite kann die Dicke des Kennzeichens gering gehalten werden, wodurch sich die Anordnung des Kennzeichens in einer Sacklochbohrung der Komponente der Anlage verbessert.

Ein vorteilhaftes Beispiel zeichnet sich dadurch aus, dass der metallische Rahmen eine zylindrische Außenkontur aufweist.

Die zylindrische Außenkontur ermöglicht, dass eine korrespondierende Sacklochbohrung auf einfache Art und Weise in die metallische Komponente einfräsbar ist. Die Anordnung des Kennzeichens wird folglich vereinfacht.

Ein vorteilhaftes Beispiel zeichnet sich dadurch aus, dass der metallische Rahmen einen Durchgang aufweist, in welchen der erste Abschnitt eingepresst ist. Durch die Einpressung des ersten Abschnitts wird eine einfache Befestigungsart verwendet, um den ersten Abschnitt zu dem metallischen Rahmen festzulegen. Gleichzeitig wird die vorteilhafte Beabstandung zu dem innen liegenden Transponder erreicht.

Ein vorteilhaftes Beispiel zeichnet sich dadurch aus, dass der erste und der zweite Abschnitt elektrisch isolierend ausgeführt sind. Durch die elektrische Isolierwirkung des ersten und zweiten Abschnitts wird eine Reflexionswirkung der von dem Lesegerät ausgesandten elektromagnetischen Wellen an der metallischen Komponente reduziert.

Ein vorteilhaftes Beispiel zeichnet sich dadurch aus, dass der erste Abschnitt eine Kunststoffplatte umfasst. Die Kunststoffplatte bietet Vorteile bei Fertigung des Kennzeichens beispielsweise durch Einpressen der Kunststoffplatte in den Halterahmen und beim Betrieb des Kennzeichens durch die Beabstandung der Antenne des Transponders von der Komponente.

Ein vorteilhaftes Beispiel zeichnet sich dadurch aus, dass der zweite Abschnitt eine gehärtete Vergussmasse umfasst. Die gehärtete Vergussmasse schützt den Transponder und stellt auf einfache Art und Weise eine formschlüssige Verbindung mit dem Halterahmen und/oder dem ersten Abschnitt her.

Ein vorteilhaftes Beispiel zeichnet sich dadurch aus, dass der zweite Abschnitt wenigstens abschnittsweise den passiven Transponder und abschnittsweise den ersten Abschnitt umgibt.

Vorteilhaft legt die Vergussmasse den Transponder auf einfache Art und Weise zu dem ersten Abschnitt fest.

Ein vorteilhaftes Beispiel zeichnet sich dadurch aus, dass der Durchgang eine von dem ersten Abschnitt wegweisende Verjüngung aufweist, und wobei die gehärtete Vergussmasse die Verjüngung wenigstens abschnittsweise umgibt. Vorteilhaft wird dadurch ein Formschluss zwischen der gehärteten Vergussmasse und dem metallischen Ring erreicht, welche die Festlegung des Transponders verbessert. Die Lebensdauer des Kennzeichens wird folglich erhöht.

Ein vorteilhaftes Beispiel zeichnet sich dadurch aus, dass der erste Abschnitt eine proximale Ausnehmung aufweist, in welcher der Transponder angeordnet ist, und dass der zweite Abschnitt zwischen lateralen Flächen des Transponders und Wandungen der Ausnehmung angeordnet ist. Durch die Beabstandung der lateralen Flächen des Transponders von den Wandungen der Ausnehmung werden in den Transponder eingeleitete Spannungen ausgehend von dem ersten Abschnitt verringert. Die gehärtete Vergussmasse, welche ein geringeres Elastizitätsmodul aufweist als der Transponder und der erste Abschnitt, sorgt für die Festlegung des Transponders und gleichzeitig für eine Spannungsentkopplung des Transponders und des ersten Abschnitts. Folglich wird die Lebensdauer des elektronischen Kennzeichens erhöht.

Ein weiter Aspekt dieser Beschreibung betrifft eine metallische Komponente einer Anlage umfassend das elektronische Kennzeichen nach einem der vorstehenden Beispiele, wobei die Komponente eine Sacklochbohrung aufweist, in welcher das elektronische Kennzeichen aufgenommen ist.

Ein vorteilhaftes Beispiel zeichnet sich dadurch aus, dass eine distale Fläche des metallischen Halterahmens bündig zu einer die Sacklochbohrung umgebenden Oberfläche der metallischen Komponente ist. Vorteilhaft wird durch die Bündigkeit eine Abreinigbarkeit verbessert und eine Beschädigung der metallischen Komponente wird verhindert. Ein vorteilhaftes Beispiel zeichnet sich dadurch aus, dass der Halterahmen mit der metallischen Komponente verschweißt ist.

In der Zeichnung zeigen:
- Figuren 1 bis 3: jeweils einen schematischen Schnitt eines elektronischen Kennzeichens;
- Figur 4: einen schematischen Schnitt einer Sacklochbohrung; und
- Figur 5: eine schematische perspektivische Darstellung einer Komponente einer Anlage.

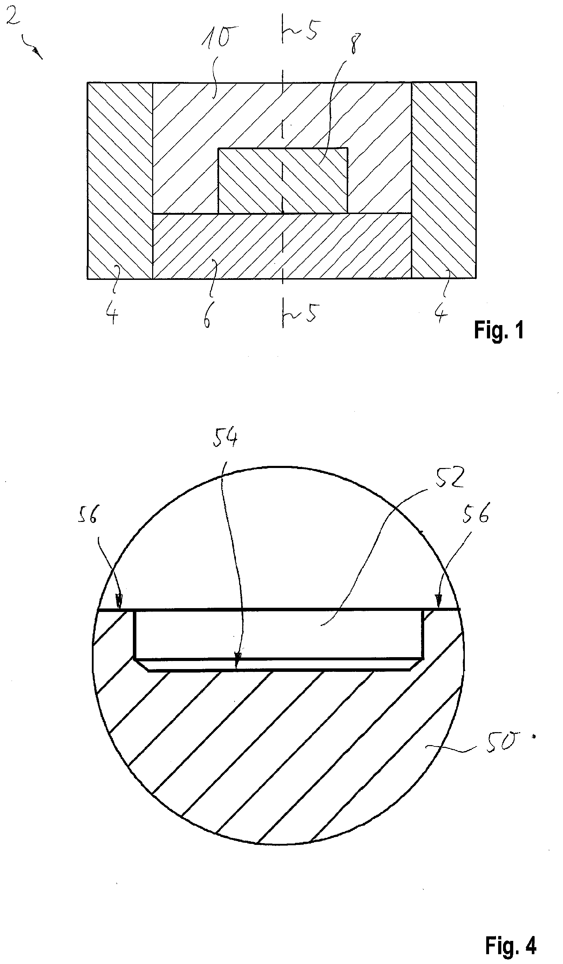

Figur 1 zeigt einen schematischen Schnitt eines elektronischen Kennzeichens 2 für eine metallische Komponente einer Anlage. Das elektronische Kennzeichen 2 umfasst einen äußeren Halterahmen 4, der beispielsweise rotationssymmetrisch um eine Mittenachse 5 aufgebaut ist. So kann das Kennzeichen 2 beispielsweise im Wesentlichen scheibenförmig aufgebaut sein. Selbstverständlich kann der Halterahmen 4 auch nicht rotationssymmetrisch ausgebildet sein. Innerhalb des metallischen Halterahmens 4 ist ein erster Abschnitt 6 angeordnet und zu dem Halterahmen 4 festgelegt. Ein passiver Transponder 8 ist mittels eines zweiten Abschnitts 10 wenigstens zu dem ersten Abschnitt 6 festgelegt. In einem Beispiel legt der zweite Abschnitt 10 den Transponder 8 zu dem ersten Abschnitt 6 und zu dem Halterahmen 4 fest. Der erste und der zweite Abschnitt 6, 10 sind elektrisch isolierend ausgeführt, was bedeutet, dass der erste und der zweite Abschnitt 6, 10 aus einem Material gefertigt sind, dessen jeweilige elektrische Leitfähigkeit weniger als 10^-8 S/cm beträgt.

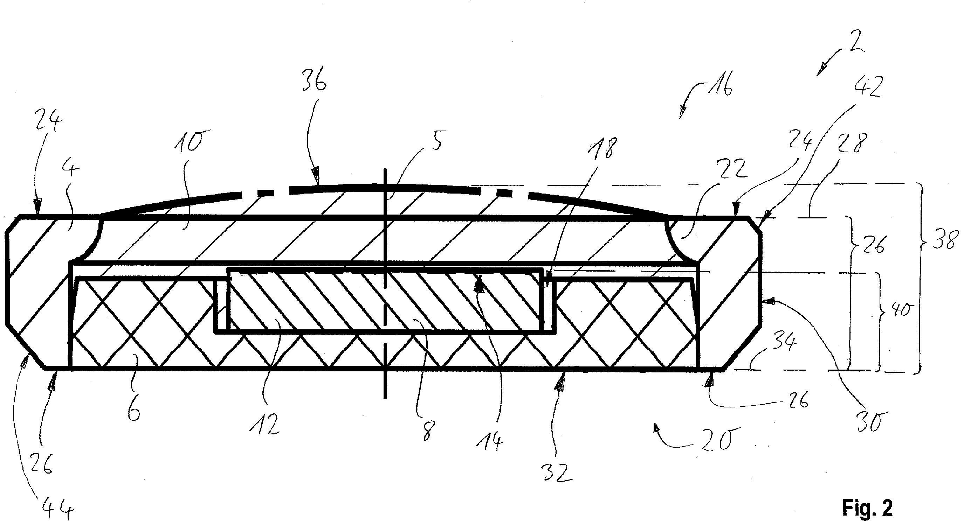

Figur 2 zeigt einen weiteren schematischen Schnitt des elektronischen Kennzeichens 2. Der Transponder 8 umfasst vorliegend ein Substrat 12, auf dessen Oberfläche eine Antennenfläche 14 ausgeführt ist, in welcher die Antenne beispielsweise als auf dem Substrat angeordnete Leiterbahn ausgeführt ist. Die Antennenfläche 14 ist vorliegend in Richtung einer Ausleseseite 16 angeordnet. Des Weiteren umfasst der Transponder einen nicht dargestellten elektronischen Schaltkreis mit einem auslesbaren Speicher. Der Transponder ist insbesondere ein RFID-Chip. Der Transponder 8 liegt in einer proximalen Ausnehmung 18 des ersten Abschnitts 6 flächig an einem Boden der Ausnehmung des ersten Abschnitts 6 an. Lateral ist der Transponder 8 zu Wandungen der proximalen Ausnehmung 18 beabstandet, wobei dieser Abstand mit Vergussmasse des zweiten Abschnitts 10 gefüllt ist. Der Transponder 8 ragt mit der Antennenfläche 14 aus der Ausnehmung 18 heraus.

Der metallische Halterahmen 4 weist einen Durchgang auf, in welchen der erste Abschnitt 6 ausgehend von einer Anlageseite 20 eingepresst ist. In proximaler Richtung verjüngt sich der erste Abschnitt 6, sodass ein Einpressen vereinfacht wird und Vergussmasse des zweiten Abschnitts 10 bei der Fertigung des Kennzeichens 2 in einen Zwischenraum zwischen dem Halterahmen 4 und dem ersten Abschnitt 6 einfließen kann. Von dem ersten Abschnitt 6 wegweisend verengt sich der Durchgang des Halterahmens 4 in einem Abschnitt 22. Die gehärtete Vergussmasse des zweiten Abschnitts 10 stellt mit dem Abschnitt 22 eine formschlüssige Verbindung in Richtung der Ausleseseite 16 her.

Das elektronische Kennzeichen 2 ist zu einer Anordnung in einer Sacklochbohrung der metallischen Komponente vorgesehen. Ein Abstand 26 zwischen einer distalen Oberfläche 24 des Halterahmens 4 und einer Anlagefläche 26 des Halterahmens 4 stimmt im Wesentlichen mit einer Tiefe der Sacklochbohrung überein, sodass die distale Oberfläche 24 und die die Sacklochbohrung umgebende Oberfläche der metallischen Komponente in einer gemeinsamen gedachten Ebene 28 liegen. Eine laterale Fläche 30 verläuft im Wesentlichen parallel zur Mittenachse 5 und ist zur Anlage an Seitenwänden der Sacklochbohrung vorgesehen. Eine Anlagefläche 32 des ersten Abschnitts 6 und die Anlagefläche 26 liegen in einer gemeinsamen gedachten Ebene 34.

Der passive Transponder 8 ist zwischen der gedachten Ebene 28, welche durch die distale Oberfläche 24 des Halterahmens 4 verläuft, und der gedachten Ebene 34, welche durch die Anlagefläche 26 des Halterahmens 4 verläuft, angeordnet. Der zweite Abschnitt 10 ist zumindest abschnittsweise ebenfalls innerhalb des metallischen Halterahmens 2 angeordnet. Der erste und der zweite Abschnitt 6 und 10 sind separate Elemente. Der erste und der zweite Abschnitt 6 und 10 legen den passiven Transponder 8 also derart zu dem metallischen Halterahmen 4 fest, dass sich der Transponder 8 komplett innerhalb des Halterahmens 4 befindet und dennoch beabstandet von einer Innenwandung des Halterahmens 4 ist. Hierbei befindet sich der erste Abschnitt 6 gänzlich innerhalb des Halterahmens 4. Damit ist der passive Transponder 8 mittels des ersten und zweiten Abschnitts 6 und 10 innerhalb des metallischen Halterahmens 4 positioniert, befindet sich also gänzlich innerhalb eines durch den metallischen Halterahmen 4 begrenzten Raumes.

Die Vergussmasse des zweiten Abschnitts 10 bildet auf der Ausleseseite 16 eine Auslesefläche 36 aus, durch welche der Transponder 8 auslesbar ist. Die Auslesefläche 36 geht bündig in die Oberfläche 24 des Halterahmens 4 über. Nach innen weist die Auslesefläche 36 eine Erhebung auf, welche die maximale Dicke 38 des Kennzeichens 2 bestimmt. Die Antennenfläche 14 des Transponders 8 ist durch eine Distanz 40 von der gedachten Ebene 34, also von wenigstens einer der Anlageflächen 26, 32, beabstandet. Die Distanz 40 beträgt mindestens 1/5 der maximalen Dicke 38 und beträgt insbesondere mindestens die Hälfte der maximalen Dicke 38.

Im Bereich einer Fase 42 wird der metallische Halterahmen 4 mit der metallischen Komponente der Anlage verschweißt. Eine proximale Fase 44 korrespondiert mit der Innenkontur des Sackloches.

Der erste Abschnitt 6 umfasst beispielsweise PEEK (Polyetheretherketon) oder PVDF (Polyvinylidenfluorid). Der zweite Abschnitt 10 umfasst beispielsweise die Vergussmasse in Form eines ausgehärteten Epoxidharzes. Der metallische Halterahmen 4 umfasst beispielsweise Edelstahl.

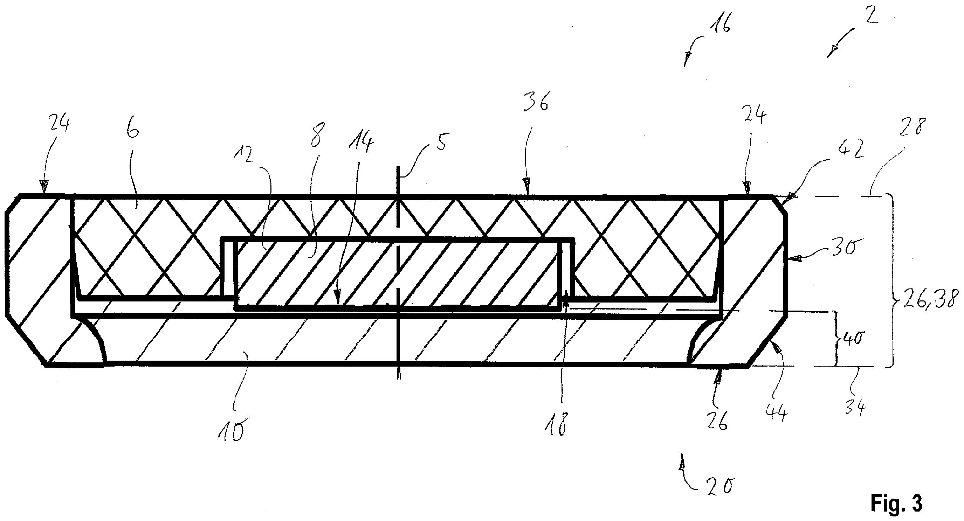

Figur 3 zeigt einen weiteren schematischen Schnitt des elektronischen Kennzeichens 2. Im Unterschied zur Ausführungsform der Figur 2 ist der erste Abschnitt 6 in Richtung der Ausleseseite 16 angeordnet und der zweite Abschnitt 10 ist in Richtung der Anlageseite 20 angeordnet. Folglich bildet der erste Abschnitt 6 die Auslesefläche 36 aus. Die Antennenfläche 14 des Transponders 8 ist in Richtung der Anlageseite 20 orientiert ausgerichtet.

Figur 4 zeigt einen schematischen Schnitt der metallischen Komponente 50 der Anlage. Die metallische Komponente 50 weist die Sacklochbohrung 52 auf, deren Innenkontur zu der Außenkontur des elektronischen Kennzeichens korrespondiert. An einem Boden 54 der Sacklochbohrung 52 liegt wenigstens der metallische Halterahmen des Kennzeichens an. Die distale Oberfläche des Kennzeichens und die Oberfläche 56, welche die Sacklochbohrung 52 umgibt, liegen bevorzugt in der gemeinsamen gedachten Ebene.

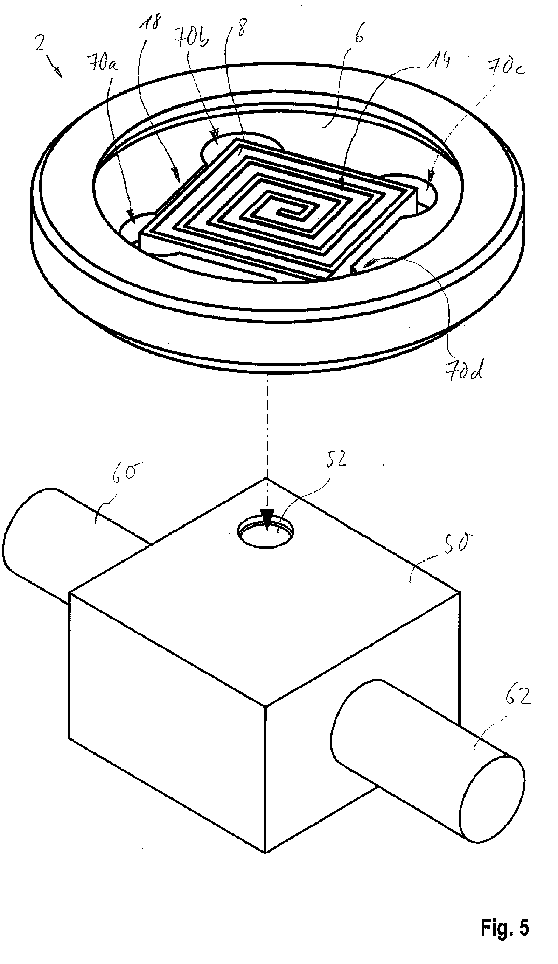

Figur 5 zeigt in einer schematischen perspektivischen Darstellung die metallische Komponente 50 der Anlage insbesondere einer Industrieanlage, in deren Sacklochbohrung 52 das elektronische Kennzeichen 2 angeordnet ist. Die metallische Komponente 50 ist beispielhaft ein Ventilkörper für ein Fluidventil umfassend einen Zulauf 60 und einen Ablauf 62. Selbstverständlich ist das Kennzeichen 2 an jedweder anderen metallischen Komponente der Anlage wie beispielsweise an einem Antrieb oder einem Gehäuse anordenbar.

Das in Figur 5 gezeigte Kennzeichen 2 ist beispielhaft ohne den zweiten Abschnitt gezeigt und gibt den Blick auf die Antennenfläche 14 des Transponders 8 frei. Die Antenne des Transponders 8 ist auf dem Substrat des Transponders 8 angeordnet und ist beispielsweise spiralartig aufgebaut. Die Ausnehmung 18 des ersten Abschnitts 6 umfasst Ecken des Transponders 8 umgebende einer jeweiligen gedachten Kreiszylinderfläche folgende Innenkonturabschnitte 70a, 70b, 70c und 70d, welche mit Vergussmasse des zweiten Abschnitts gefüllt eine Einkopplung von Spannungen in den Transponder 8 verringern.

## Patentansprüche

1. Ein elektronisches Kennzeichen (2) für eine metallische Komponente einer Anlage, wobei das elektronische Kennzeichen (2) umfasst:
- einen metallischen Halterahmen (4),
- einen ersten Abschnitt (6), welcher innerhalb des metallischen Halterahmens (4) angeordnet und zu dem metallischen Halterahmen (4) festgelegt ist,
- einen passiven Transponder (8), und
- einen zweiten Abschnitt (10), wobei der zweite Abschnitt (10) den passiven Transponder (8) wenigstens zu dem ersten Abschnitt (6) festlegt.

2. Das elektronische Kennzeichen (3) gemäß dem Anspruch 1, wobei der passive Transponder (6) innerhalb des metallischen Halterahmens (2) angeordnet ist.

3. Das elektronische Kennzeichen (3) gemäß dem Anspruch 1 oder 2, wobei der zweite Abschnitt (10) wenigstens abschnittsweise innerhalb des metallischen Halterahmens (2) angeordnet ist.

4. Das elektronische Kennzeichen (2) gemäß dem Anspruch 1 oder 2, wobei der erste Abschnitt (6) hin zu einer Anlageseite des elektronischen Kennzeichens (2) angeordnet ist, und wobei der zweite Abschnitt (10) das elektronische Kennzeichen (2) mit einer Auslesefläche abschließt.

5. Das elektronische Kennzeichen (2) gemäß dem Anspruch 1 oder 2, wobei der zweite Abschnitt (10) hin zu einer Anlageseite des elektronischen Kennzeichens (2) angeordnet ist, und wobei der erste Abschnitt (6) das elektronische Kennzeichen (2) mit einer Auslesefläche abschließt.

6. Das elektronische Kennzeichen (2) gemäß einem der vorstehenden Ansprüche, wobei eine Antennenfläche des passiven Transponders (8) mindestens 1/5 einer maximalen Dicke des elektronischen Kennzeichens (2), insbesondere mindestens die Hälfte der maximalen Dicke des elektronischen Kennzeichens (2), von einer bzw. der Anlagefläche des elektronischen Kennzeichens (2) beabstandet ist.

7. Das elektronische Kennzeichen (2) gemäß einem der vorstehenden Ansprüche, wobei der metallische Halterahmen (2) eine zylindrische Außenkontur aufweist.

8. Das elektronische Kennzeichen (2) gemäß einem der vorstehenden Ansprüche, wobei der metallische Halterahmen (2) einen Durchgang aufweist, in welchen der erste Abschnitt (6) eingepresst ist.

9. Das elektronische Kennzeichen (2) gemäß einem der vorstehenden Ansprüche, wobei der erste und der zweite Abschnitt (6, 10) elektrisch isolierend ausgeführt sind.

10. Das elektronische Kennzeichen (2) gemäß einem der vorstehenden Ansprüche, wobei der erste Abschnitt (6) eine Kunststoffplatte umfasst.

11. Das elektronische Kennzeichen (2) gemäß einem der vorstehenden Ansprüche, wobei der zweite Abschnitt (10) eine gehärtete Vergussmasse umfasst.

12. Das elektronische Kennzeichen (2) gemäß dem Anspruch 10, wobei der zweite Abschnitt (10) wenigstens abschnittsweise den passiven Transponder (8) und abschnittsweise den ersten Abschnitt (6) umgibt.

13. Das elektronische Kennzeichen (2) gemäß Anspruch 10 oder 11, wobei der Durchgang des Halterahmens (4) eine von dem ersten Abschnitt (6) wegweisende Verjüngung aufweist, und wobei die gehärtete Vergussmasse die Verjüngung wenigstens abschnittsweise umgibt.

14. Das elektronische Kennzeichen (2) gemäß einem der vorstehenden Ansprüche, wobei der erste Abschnitt (6) eine proximale Ausnehmung aufweist, in welcher der Transponder (8) angeordnet ist, und wobei der zweite Abschnitt (10) zwischen lateralen Flächen des Transponders (8) und Wandungen der Ausnehmung angeordnet ist.

15. Eine metallische Komponente (50) einer Anlage umfassend das elektronische Kennzeichen (2) nach einem der vorstehenden Ansprüche, wobei die Komponente (50) eine Sacklochbohrung aufweist, in welcher das elektronische Kennzeichen (2) aufgenommen ist.

16. Die metallische Komponente (50) gemäß dem vorstehenden Anspruch, wobei eine distale Fläche des metallischen Halterahmens (4) bündig zu einer die Sacklochbohrung umgebenden Oberfläche der metallischen Komponente ist.

17. Die metallische Komponente (50) gemäß dem vorstehenden Anspruch, wobei der Halterahmen (4) mit der metallischen Komponente verschweißt ist.
